# EUROPEAN PATENT APPLICATION

(11) **EP 4 835 389 A1**
(43) Date of publication of application: **04.11.2026**
(21) Application number: 24909250.3
(22) Date of filing: 10.12.2024
(51) Int. Cl.: F27B 1/18, F27D 17/22, F27D 17/25, B01D 50/00, C21B 11/02, F27B 1/16

(54) **SYSTEM AND METHOD FOR SEPARATING FINE METAL PARTICLES FROM THE TOP GAS OF A METALLURGICAL FURNACE, AND METALLURGICAL FURNACE FOR PRODUCING PIG IRON AND SEPARATING FINE METAL PARTICLES**

(30) Priority: 27.12.2023 BR 102023027583
(71) Applicant: Tecnored Desenvolvimento Tecnologico S.A., 12422-281, Pindamonhangaba, SP (BR)
(72) Inventor: POTTER, Stephen Michael, 22250-145 Rio de Janeiro, RJ (BR); DE OLIVEIRA, Ronald, Lopes, 12405-278 Pindamonhangaba, SP (BR); GONÇALVES, Guilherme Francisco, 12412-520 Pindamonhangaba, SP (BR); GONÇALVES, Manoel Vítor, Borel, 31330-670 Belo Horizonte, MG (BR); DA LUZ, André, Silva, 12420-680 Pindamonhangaba, SP (BR); BRAGA, Pedro Henrique, Ferreira, 12410-200 Pindamonhangaba, SP (BR)
(74) Representative: Clarke, Modet y Cía., S.L.
(86) International application number: PCT/BR2024/050574
(87) International publication number: WO 2025/137750

(57) **Abstract**

The present invention relates to a system for separating fine metal particles from the top gas of a metallurgical furnace (20), comprising: at least one gas transport pipe (10) configured to convey the top gas out of the metallurgical furnace (20); at least one coarse particle separator (11) for separating coarse particles from the top gas; at least one first collection tank (12) coupled downstream of the at least one coarse particle separator (11); at least one fine particle separator (13) for separating fine metal particles from the top gas; and at least one second collection tank (14) coupled downstream of the at least one fine particle separator (13), the at least one second collection tank (14) being configured to receive a slurry comprising the fine metal particles separated from the top gas wherein the at least one gas transport pipe (10) forms a downstream connection between the metallurgical furnace (20), the at least one coarse particle separator (11) and the at least one fine particle separator (13). The invention also relates to a method for separating fine metal particles from the top gas of a metallurgical furnace (20), as well as to a metallurgical furnace (20) for producing pig iron and separating fine metal particles.

## Description

### TECHNICAL FIELD

The present invention relates to a system and method applied to the steelmaking industry. Specifically, the present invention relates to a system and method for producing pig iron and fine metal particles.

### BACKGROUND

Fine metal particles, such as, for example, metal particles consisting essentially of zinc particles, are particularly problematic for the operation of steelmaking furnaces and blast furnaces during pig iron production. Steelmaking furnaces from the state of the art generally employ controls to limit the load of these fine metal particles in order to prevent a recirculation flow within the furnace between vapor and condensate states that is detrimental to furnace operation.

Some steelmaking furnaces operate at temperatures that allow a portion of these particles to volatilize. In such furnaces, the particles evaporate in hotter regions; however, as the vapors from these fine metal particles come into contact with cooler or upper regions, the particles begin to condense and deposit onto the cold surfaces. The top of the furnace is an example of such a cooler region; steelmaking furnaces from the state of the art typically have a top temperature of around 150 °C, which is too low to volatilize the fine metal particles. Consequently, the maximum zinc content accepted during blast furnace operation is approximately 150 g of zinc per tonne of hot metal produced.

If the vapors from fine metal particles are not removed, the accumulation of this material on the furnace walls can lead to the formation of thick metal layers (accretions or "scabs") in the upper part of the furnace (where temperatures are lower).

This process causes frequent interruptions to the operation of the steelmaking furnace, which is unfeasible for reactor productivity.

Among the known solutions for pig iron production, the patent document BR 10 2013 033702 1 B1 describes a metallurgical furnace capable of operating with a wide range of raw materials and fuels, including those with high levels of impurities. To this end, the metallurgical furnace comprises (i) at least one upper shaft, (ii) at least one lower shaft, (iii) at least one fuel feeder positioned substantially between the at least one upper shaft and the at least one lower shaft, (iv) at least one row of tuyeres positioned on at least one of the at least one upper shaft and the at least one lower shaft, the at least one row of tuyeres providing fluid communication between the interior of the furnace and the external environment, and (v) at least one burner positioned on at least one of the at least one upper shaft and the at least one lower shaft; the use of at least one burner in conjunction with the at least one row of tuyeres generates very intense heat release due to the exothermic reactions occurring through this combination.

The patent document BR 11 2017 012467 0 B1 describes a metallurgical furnace capable of operating with a wide range of raw materials and fuels, including those with high levels of impurities. To this end, the metallurgical furnace comprises (i) at least one upper shaft, (ii) at least one lower shaft, (iii) at least one fuel feeder positioned substantially between the at least one upper shaft and the at least one lower shaft, (iv) at least one row of tuyeres positioned on at least one of the at least one upper shaft and the at least one lower shaft, the at least one row of tuyeres providing fluid communication between the interior of the furnace and the external environment, (v) at least one hood, referred to as a Curtain Wall, located in the upper shaft and extending longitudinally along the furnace, and (vi) at least one system for charging permeability fuel into the center of the upper shaft, referred to as a booster charging system. The use of the booster charging system in conjunction with the Curtain Wall enables the channeling of gas generated by the combustion of fuel in the lower hearth along with air injected through primary and secondary tuyeres, thereby controlling gas distribution within the furnace more efficiently.

On the other hand, the production of metal alloys from fine metal particles, such as zinc particles, is commonly carried out using a Waelz furnace. The process using the Waelz furnace to concentrate zinc is a pyrometallurgical route for recovering zinc from zinc-bearing materials/co-products, predominantly in the form of zincite (ZnO) and/or franklinite (ZnFe₂O₄), such as electric arc furnace dust. This process involves feeding the residue into a rotary furnace, where it is heated to temperatures approaching 1200 °C. The zinc present in the residue is reduced and re-oxidized, then collected in a dust collection system.

Although the state of the art presents metallurgical furnaces for pig iron production and the Waelz furnace as an alternative for concentrating zinc, it fails to disclose a metallurgical furnace capable of simultaneously producing pig iron and separating fine metal particles, such as zinc.

Furthermore, the state of the art fails to disclose a system and method for separating fine metal particles from the top gas of a metallurgical furnace that enables the recovery of said fine metal particles, such as zinc, from the top gas.

### OBJECTIVES

A first objective of the present invention is to solve this technical problem by providing a system and method for separating fine metal particles from the top gas of a metallurgical furnace.

A second objective of the present invention is to solve this technical problem by providing a metallurgical furnace for producing pig iron and separating fine metal particles.

A third objective of the present invention is to provide a metallurgical furnace for producing pig iron and separating fine metal particles as an alternative to the Waelz furnace.

A fourth objective of the present invention is to provide a metallurgical furnace for producing pig iron and separating fine metal particles that can be fed with material rich in fine metal particles without compromising the operation of the metallurgical furnace.

### SUMMARY

The present invention relates to a system for separating fine metal particles from the top gas of a metallurgical furnace, comprising: at least one gas transport pipe configured to transport the top gas out of the metallurgical furnace; at least one coarse particle separator for separating coarse particles from the top gas; at least one first collection tank coupled downstream of the at least one coarse particle separator; at least one fine particle separator for separating fine metal particles from the top gas; and at least one second collection tank coupled downstream of the at least one fine particle separator, wherein the at least one second collection tank is configured to receive a slurry comprising the fine metal particles separated from the top gas; wherein the at least one gas transport pipe connects the metallurgical furnace, the at least one coarse particle separator, and the at least one fine particle separator in a downstream arrangement.

The present invention further relates to a method for separating fine metal particles from a top gas of a metallurgical furnace, comprising: conveying the top gas out of the metallurgical furnace through at least one gas transport pipe; separating coarse particles from the top gas using at least one coarse particle separator; collecting the deposited coarse particles in at least one first collection tank coupled downstream of the at least one coarse particle separator; separating fine metal particles from the top gas using at least one fine particle separator; and collecting a slurry comprising the fine metal particles separated from the top gas in at least one second collection tank coupled downstream of the at least one fine particle separator.

The present invention further relates to a metallurgical furnace for producing pig iron and separating fine metal particles, comprising: at least one upper shaft; at least one lower shaft; at least one fuel feeder positioned between the at least one upper shaft and the at least one lower shaft; at least one row of tuyeres positioned in at least one of the at least one upper shaft and the at least one lower shaft, the at least one row of tuyeres providing fluid communication between the interior of the furnace and the external environment; at least one burner positioned in at least one of the at least one upper shaft and the at least one lower shaft; and a system for separating fine metal particles from a top gas of the metallurgical furnace of the present invention connected to a gas outlet of the metallurgical furnace; wherein the metallurgical furnace is fed with a plurality of solid agglomerates comprising fine metal particles.

### BRIEF DESCRIPTION OF THE DRAWINGS

A more complete understanding of the present disclosure may be obtained by referring to the detailed description when considered in conjunction with the following illustrative figures.
Figure 1 illustrates a system for separating fine metal particles from the top gas of a metallurgical furnace according to an embodiment of the present invention.
Figure 2 illustrates the metallurgical furnace of the system for producing pig iron and separating fine metal particles according to an embodiment of the present invention.
Figure 3 illustrates the metallurgical furnace coupled to the system for separating fine metal particles from the top gas of a metallurgical furnace according to an embodiment of the present invention.

### DETAILED DESCRIPTION

The present invention relates to a system for separating fine metal particles from the top gas of a metallurgical furnace 20, comprising: at least one gas transport pipe 10 configured to convey the top gas out of the metallurgical furnace 20; at least one coarse particle separator 11 for separating coarse particles from the top gas; at least one first collection tank 12 coupled downstream of the at least one coarse particle separator 11; at least one fine particle separator 13 for separating fine metal particles from the top gas; and at least one second collection tank 14 coupled downstream of the at least one fine particle separator 13, wherein the at least one second collection tank 14 is configured to receive a slurry comprising the fine metal particles separated from the top gas; wherein the at least one gas transport pipe 10 connects, in a downstream direction, the metallurgical furnace 20, the at least one coarse particle separator 11, and the at least one fine particle separator 13.

The detailed description of exemplary embodiments herein refers to the accompanying drawings, which show embodiments of the present invention. Although these exemplary embodiments are described in sufficient detail to enable those skilled in the art to practice the disclosures, it should be understood that other embodiments may be carried out and that logical changes and adaptations in design and construction may be made in accordance with this disclosure and the teachings herein. Thus, the detailed description herein is presented for purposes of illustration only and not of limitation.

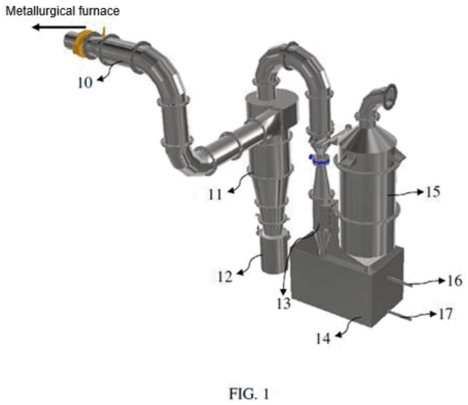

Figure 1 illustrates the system for separating the fine metal particles of the present invention. In particular, Figure 1 illustrates at least one coarse particle separator 11 for separating coarse particles from the top gas, at least one first collection tank 12 coupled downstream of the at least one coarse particle separator 11, at least one fine particle separator 13 for separating fine metal particles from the top gas, and at least one second collection tank 14 coupled downstream of the at least one fine particle separator 13.

Preferably, the at least one gas transport pipe 10 is coupled to the top of the metallurgical furnace 20 to capture the gases expelled by the furnace 20 and convey them to the at least one coarse particle separator 11.

Preferably, the at least one coarse particle separator 11 is a cyclone. In particular, within the at least one coarse particle separator 11, coarse particles are separated from the mixture of top gas and fine metal particles via vortex separation, using rotational and gravitational effects. Coarse solid particles tend to strike the inner walls of the at least one coarse particle separator 11 and lose speed, falling to the bottom of the element (underflow), where they settle in at least one first collection tank 12. The at least one first collection tank 12 is coupled downstream of the at least one coarse particle separator 11 and is where the collection of coarse particles takes place.

On the other hand, the lighter fine metal particles and top gas are forced upward, due to the formation of negative pressure at the center of the vortex, and expelled from the upper region of the at least one coarse particle separator 11, from where they are conveyed via at least one gas transport pipe 10 to the at least one fine particle separator 13. It is noted that the coarse particles deposited in the at least one first collection tank 12 have a low concentration of fine metal particles, such that the gas proceeding to the at least one fine particle separator 13 retains a high concentration of fine metal particles.

Preferably, the at least one fine particle separator 13 is a Venturi scrubber. In particular, atomization of a scrubbing liquid occurs inside the at least one fine particle separator 13, wherein the scrubbing liquid is injected to separate the fine metal particles from the top gas introduced into this element. Specifically, this scrubbing liquid is responsible for capturing the fine metal particles from the top gas. Optionally, the scrubbing liquid is water. Fine metal particles are separated from the top gas due to the phenomenon of differing exit velocities between the gas particles and the scrubbing liquid within the at least one fine particle separator 13.

This phenomenon causes the fine metal particles to separate from the top gas in the form of slurry or mud that settles at the bottom of at least one second collection tank 14. The at least one second collection tank 14 is coupled downstream of the at least one fine particle separator 13. Furthermore, the at least one second collection tank 14 has a preferably prismatic and inclined bottom to allow the fine metal particle slurry to flow and to facilitate its collection.

The top gas is discharged from the at least one fine particle separator 13 and falls into the at least one second collection tank 14. While the fine metal particle slurry settles at the bottom of the at least one second collection tank 14, the less dense top gas remains within the at least one second collection tank 14, resulting in phase separation inside the tank until the top gas is routed, preferably, to at least one dehumidifier 15 or to a burner.

Preferably, the system of the present invention further comprises at least one dehumidifier 15 connected downstream of the at least one second collection tank 14 to collect the top gas hovering in the upper part of the at least one second collection tank 14 and to dehumidify the remaining top gas.

Furthermore, each of the at least one dehumidifier 15 preferably comprises a metal mesh to intercept liquid droplets in the gas and dry it. It should be noted that some of these liquid droplets may contain fine metal particles, which are captured by the metal mesh such that the dried top gas exits the at least one dehumidifier 15, while the liquid droplets containing fine metal particles, intercepted by the metal mesh, fall into the at least one second collection tank 14.

Preferably, to collect the fine metal particle slurry, the at least one second collection tank 14 comprises at least one slurry drain 17, responsible for discharging the fine metal particle slurry from the system. This flow is facilitated by the preferably prismatic and inclined shape of the at least one second collection tank 14.

Optionally, collection may be performed via an upper part of the at least one second collection tank 14, without using the slurry drain 17.

Optionally, the at least one second collection tank 14 further comprises at least one water inlet pipe 16 for introducing water into the at least one second collection tank 14 for cleaning and eventual maintenance of the at least one second collection tank 14.

Preferably, due to the high exit temperatures of the top gas from the metallurgical furnace 20, the at least one gas transport pipe 10, the at least one coarse particle separator 11, the at least one fine particle separator 13, and the at least one dehumidifier 15 are internally lined with a refractory material.

Preferably, the fine metallic particles are zinc particles.

The present invention further relates to a method for separating fine metal particles from a top gas of a metallurgical furnace 20, comprising: conveying the top gas out of the metallurgical furnace 20 through at least one gas transport pipe 10; separating coarse particles from the top gas using at least one coarse particle separator 11; collecting the coarse particles deposited in at least one first collection tank 12 coupled downstream of the at least one coarse particle separator 11; separating the fine metal particles from the top gas using at least one fine particle separator 13; and collecting a slurry comprising the fine metal particles separated from the top gas in at least one second collection tank 14, coupled downstream of the at least one fine particle separator 13.

Preferably, after separating coarse particles from the top gas, the method of the present invention further comprises collecting the coarse particles deposited in at least one first collection tank 12 coupled downstream of the at least one coarse particle separator 11, wherein the at least one coarse particle separator 11 consists of a cyclone. The coarse particles are separated from the top gas and the fine metal particles by rotational and gravitational effects within the at least one coarse particle separator 11. The coarse particles are deposited at the bottom of at least one first collection tank 12, where they are collected.

Preferably, separating the fine metal particles from the top gas via at least one fine particle separator 13 comprises injecting a scrubbing liquid into the at least one fine particle separator 13, wherein the at least one fine particle separator 13 consists of a Venturi scrubber. Optionally, the scrubbing liquid is water. The scrubbing liquid captures the fine metal particles from the top gas; this separation occurs due to the velocity difference between the scrubbing liquid, and its droplet size (atomization), and the top gas within the at least one fine particle separator 13. The fine metal particles are then deposited at the bottom of at least one second collection tank 14 in the form of mud or slurry. Preferably, the at least one second collection tank 14 is coupled downstream of the at least one fine particle separator 13.

Preferably, the method of the present invention further comprises intercepting liquid droplets, which may contain fine metal particles, remaining in the top gas using the metal mesh of at least one dehumidifier 15, wherein the at least one dehumidifier 15 is connected downstream of the at least one second collection tank 14. In addition to increasing the capture of fine metal particles, the metal mesh in this step also operates to dehumidify the top gas by capturing liquid droplets present in the gas. These liquid droplets containing fine metal particles, intercepted by the metal mesh, fall into the at least one second collection tank 14, while the dried top gas is discharged from the at least one dehumidifier 15.

Preferably, collecting a slurry comprising the fine metal particles separated from the top gas in at least one second collection tank 14 comprises collecting the fine metal particles via a slurry drain 17 of the at least one second collection tank 14.

Optionally, collecting a slurry comprising the fine metal particles separated from the top gas in at least one second collection tank 14 comprises collecting the slurry through an upper opening of the at least one second collection tank 14.

The present invention also relates to a metallurgical furnace 20 for pig iron production and fine metal particle separation, comprising: at least one upper shaft 1; at least one lower shaft 2; at least one fuel feeder positioned between the at least one upper shaft 1 and the at least one lower shaft 2; and at least one row of tuyeres 3, 4 positioned on at least one of at least one upper shaft 1 and at least one lower shaft 2, said at least one row of tuyeres 3, 4 providing fluid communication between the interior of the furnace 20 and the external environment; and at least one burner positioned on at least one of at least one upper shaft 1 and at least one lower shaft 2; and a system for separating fine metal particles from a top gas of the metallurgical furnace 20 of the present invention, connected to a gas outlet of the metallurgical furnace 20; wherein the metallurgical furnace 20 is fed with a plurality of solid agglomerates comprising fine metal particles.

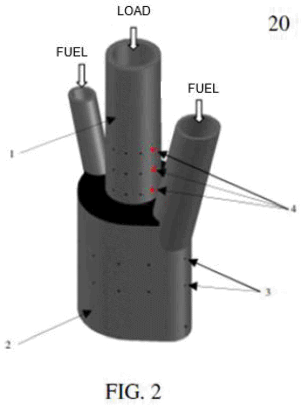

Figure 2 illustrates the metallurgical furnace 20 for pig iron production and fine metal particle separation, the metallurgical furnace 20 comprising the at least one upper shaft 1, the at least one lower shaft 2, and the at least one row of tuyeres 3, 4. The metallurgical furnace 20 of the present invention consists essentially of an upper shaft 1 where the load (raw material) is charged into the furnace 20.

The upper shaft 1 features a set comprising at least one row of secondary tuyeres 4, preferably orifices, that allow for the injection of hot or cold atmospheric air to burn CO and other combustible gases present in the ascending gas stream. The injected air may optionally be enriched with O₂. Furthermore, gaseous, liquid, or solid fuel may be injected through the tuyeres 4 along with the injected air.

The furnace 20 of the present invention further comprises a lower shaft 2, having a preferably circular or rectangular cross-section, with a diameter or dimensions sufficient to accommodate solid fuel feeding. The diameter or cross-sectional width of the shaft 2 is larger than that of the shaft 1, providing sufficient space for the positioning of fuel feeders.

Fuel supply ducts 5 may be coupled to the feeders, located around the junction between the upper shaft 1 and the lower shaft 2, to ensure fuel charging onto the furnace bed while preventing load entrainment when using fine materials. As the load descends through the feeder, preheating, pre-drying, and distillation of the volatile fractions present in the solid fuels and combustible carbonaceous residues take place.

Preferably, the lower shaft 2 has one or more rows of primary tuyeres 3 which, like the secondary tuyeres described above, serve to inject hot or cold air, optionally enriched with O₂. Powdered solid, liquid, or gaseous fuels may also be injected to partially burn the fuel, thereby producing gas and supplying the thermal energy required for the reduction and/or melting of the charge.

Additionally, at least a portion of the primary or secondary tuyeres 3, 4 preferably comprises gas burners. These burners positioned at the tuyeres 4 preferably comprise a coaxial tube, that is, a small central tube through which fuel is injected, and an outer tube surrounding it through which the air blown by the tuyeres 3, 4 (or any other oxidizing agent) passes.

Thus, the injected air flows through the outer tube of the burner, while fuel flows through the central tube 12. The air is then mixed with the fuel so that the mixture burns in the region downstream of the burner, a region located inside the furnace. This ensures greater safety for the combustion process, since the mixing of the fuel with the oxidizing agent and the subsequent combustion occur only inside the furnace.

The combination of the air blown through the tuyeres 3, 4 with the injected fuel (gas, liquid, or solid) burned in the burners generates intense heat release due to the exothermic reactions resulting from this combination.

It should be noted that the metallurgical furnace 20 of the present invention is preferably the metallurgical furnace described in the patent BR 102013033702-1, held by the same Applicant, the contents of which are fully incorporated into the present description for ready reference.

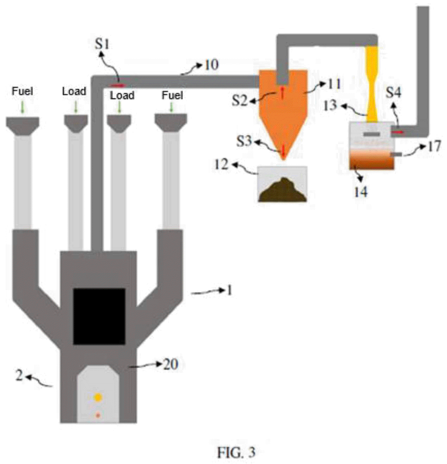

Figure 3 illustrates the coupling of the system for separating the fine metal particle for top gas according to the present invention to the metallurgical furnace 20. In addition to the metallurgical furnace 20, the following are highlighted: the at least one gas transport pipe 10 connecting the furnace 20 to the at least one coarse particle separator 11; the at least one coarse particle separator 11 connected downstream to the at least one first collection tank 12; the at least one gas transport pipe 10 further connecting the at least one coarse particle separator 11 to the at least one fine particle separator 13; and the at least one second collection tank 14 connected downstream to the at least one fine particle separator 13.

The red arrow S1 inside the at least one gas transport pipe 10 indicates the direction of gas flow expelled by the metallurgical furnace 20. Furthermore, the red arrow S2 at the at least one coarse particle separator 11 indicates the direction of gas flow containing fine particles, and the arrow S3 indicates the direction of the coarse particles toward the at least one first collection tank 12. Also visible is the slurry drain 17 for collecting slurry containing fine metallic particles from the at least one second collection tank 14. Finally, the clean gas, containing little to no fine metal particles, is discharged from the at least one collection tank 14 for dehumidification. This clean gas is represented by arrow S4.

Additionally, the metallurgical furnace is fed with a metal load (raw material) and fuel. Preferably, the metal load consists of a plurality of solid agglomerates containing fine metallic particles.

Preferably, the plurality of solid agglomerates containing fine metal particles consists of a plurality of solid agglomerates containing electric arc furnace dust. More preferably, the plurality of solid agglomerates containing electric arc furnace dust consists of a plurality of briquettes containing electric arc furnace dust. Preferably, the fine metal particles are zinc particles. It should be noted that the source of zinc for the solid agglomerate used in the present invention is not limited to electric art furnace dust; other zinc sources may be used, such as one or more of the following: basic oxygen furnace dust, willemite residues (from zinc mines), zinc-bearing steelmaking co-products, or processed zinc-bearing scrap. This feature provides the invention with the advantage of improved treatment and reuse of these steelmaking residues for zinc production.

In view of this, optionally, the plurality of solid agglomerates comprising fine metal particles of the present invention consists of a plurality of solid agglomerates comprising one or more of basic oxygen steelmaking dust, willemite residues, zinc-bearing steelmaking co-products, or zinc-bearing processed scrap.

Preferably, the steelmaking furnace 20 is fed with a metal load comprising self-reducing briquettes, in which the metal fraction is composed of any steelmaking co-product meeting the minimum iron content requirements for pig iron production via this route. Preferably, this metal load is reduced to produce pig iron.

Preferably, the steelmaking furnace 20 has a top temperature between 600 °C and 700 °C. This temperature, combined with the blast flow rate of the furnace 20, allows zinc to be removed from the furnace 20 in its top gas before solidifying on the inner walls of the furnace. It is noted that the blast flow rate of the furnace of the present invention is driven by the presence of at least one row of tuyeres (3, 4) and at least one burner.

Thus, the steelmaking furnace 20 for pig iron production and fine metal particle separation, as well as the system and method for separating fine metal particles from the top gas of a steelmaking furnace 20 according to the present invention, are attractive because they provide a means for the simultaneous production of pig iron and zinc, serving as an alternative to the traditional pyrometallurgical process, namely the Waelz furnace. It is also worth noting that the Waelz furnace yields only concentrated zinc as a product. In contrast, the system, method, and metallurgical furnace 20 proposed in the present invention produce both pig iron and concentrated zinc. Furthermore, the metallurgical furnace 20 employed in the present invention can be fed with materials having a high zinc concentration, such as electric arc furnace dust, without the accumulation of condensed zinc on the inner walls of the furnace. This also eliminates the need for strict control over the zinc concentration of the feed material, a requirement for metallurgical furnaces from the state of the art to prevent such deposits on their inner walls. The absence of zinc accumulation on the walls of furnace 20 means fewer maintenance shutdowns required, thereby avoiding any compromise to productivity.

Numerous variations falling within the scope of protection of the present application are permissible. Thus, it is emphasized that the present invention is not limited to the particular configurations/embodiments described above.

## Claims

1. SYSTEM FOR SEPARATING FINE METAL PARTICLES FROM A TOP GAS OF A METALLURGICAL FURNACE (20), **characterized by** comprising:
at least one gas transport pipe (10) configured to convey the top gas out of the metallurgical furnace (20);
at least one coarse particle separator (11) for separating coarse particles from the top gas;
at least one first collection tank (12) coupled downstream of the at least one coarse particle separator (11);
at least one fine particle separator (13) for separating the fine metal particles from the top gas; and
at least one second collection tank (14) coupled downstream of the at least one fine particle separator (13), wherein the at least one second collection tank (14) is configured to receive a slurry comprising the fine metal particles separated from the top gas;
wherein the at least one gas transport pipe (10) connects, in a downstream direction, the metallurgical furnace (20), the at least one coarse particle separator (11), and the at least one fine particle separator (13).

2. SYSTEM, according to claim 1, **characterized in that** the at least one coarse particle separator (11) consists of a cyclone.

3. SYSTEM, according to claim 1 or 2, **characterized in that** the at least one fine particle separator (13) consists of a Venturi scrubber.

4. SYSTEM, according to any one of claims 1 to 3, **characterized by** further comprising at least one dehumidifier (15) for dehumidifying the remaining top gas, wherein the dehumidifier (15) is connected downstream of the at least one second collection tank (14).

5. SYSTEM, according to claim 4, **characterized in that** each of the at least one dehumidifier (15) comprises a metal mesh for intercepting liquid droplets comprising remaining fine metal particles.

6. SYSTEM, according to any one of claims 1 to 5, **characterized in that** the at least one second collection tank (14) comprises at least one slurry drain (17) and at least one water inlet pipe (16).

7. SYSTEM, according to any one of claims 1 to 6, **characterized in that** the at least one second collection tank (14) has an inclined, prismatic-shaped bottom.

8. SYSTEM, according to any one of claims 4 to 7, **characterized in that** the at least one gas transport pipe (10), the at least one coarse particle separator (11), the at least one fine particle separator (13), and the at least one dehumidifier (15) are internally lined with a refractory material.

9. SYSTEM, according to any one of claims 1 to 8, **characterized in that** the fine metal particles are zinc particles.

10. METHOD FOR SEPARATING FINE METAL PARTICLES FROM A TOP GAS OF A METALLURGICAL FURNACE (20), **characterized by** comprising:
conveying the top gas out of the metallurgical furnace (20) through at least one gas transport pipe (10);
separating coarse particles from the top gas by means of at least one coarse particle separator (11);
collecting the deposited coarse particles in at least one first collection tank (12) coupled downstream of the at least one coarse particle separator (11),
separating the fine metal particles from the top gas by means of at least one fine particle separator (13); and
collecting a slurry comprising the fine metal particles separated from the top gas in at least one second collection tank (14), coupled downstream of the at least one fine particle separator (13).

11. METHOD, according to claim 10, **characterized in that** separating coarse particles from the top gas by means of at least one coarse particle separator (11) comprises using rotational and gravitational effects for the separation of the coarse particles, wherein the at least one coarse particle separator (11) consists of a cyclone.

12. METHOD, according to claim 10 or 11, **characterized in that** separating the fine metal particles from the top gas via at least one fine particle separator (13) comprises injecting a scrubbing liquid into the at least one fine particle separator (13), wherein the at least one fine particle separator (13) consists of a Venturi scrubber.

13. METHOD, according to any one of claims 10 to 12, **characterized by** further comprising:
intercepting liquid droplets comprising the fine metal particles remaining in the top gas via a metal mesh of at least one dehumidifier (15), wherein the at least one dehumidifier (15) is connected downstream of the at least one second collection tank (14).

14. METHOD, according to any one of claims 10 to 13, **characterized in that** collecting a slurry comprising the fine metal particles separated from the top gas in at least one second collection tank (14) comprises collecting the fine metal particles via a slurry drain (17) of the at least one second collection tank (14), wherein the fine metal particles are zinc particles.

15. METHOD, according to any one of claims 10 to 13, **characterized in that** collecting a slurry comprising the fine metal particles separated from the top gas in at least one second collection tank (14) comprises collecting the slurry through a top opening of the at least one second collection tank (14), wherein the fine metal particles are zinc particles.

16. METALLURGICAL FURNACE (20) FOR PIG IRON PRODUCTION AND SEPARATION OF FINE METAL PARTICLES, **characterized by** comprising:
at least one upper shaft (1); at least one lower shaft (2); at least one fuel feeder positioned between the at least one upper shaft (1) and the at least one lower shaft (2); and at least one row of tuyeres (3, 4) positioned on at least one of the at least one upper shaft (1) and the at least one lower shaft (2), the at least one row of tuyeres (3, 4) fluidly connecting the interior of the furnace (20) with the external environment; and at least one burner positioned on at least one of the at least one upper shaft (1) and the at least one lower shaft (2);
wherein the metallurgical furnace (20) is fed with a plurality of solid agglomerates comprising fine metal particles; and
a system for separating fine metal particles from a top gas of the metallurgical furnace (20), as defined in claim 1, connected to a gas outlet of the metallurgical furnace (20) to separate the fine metal particles originating from the solid agglomerates and which are a by-product of pig iron production in the metallurgical furnace (20).

17. METALLURGICAL FURNACE (20), according to claim 16, **characterized in that** the plurality of solid agglomerates comprising fine metal particles consists of a plurality of solid agglomerates comprising electric arc furnace dust, wherein the plurality of solid agglomerates is a plurality of briquettes and wherein the fine metal particles are zinc particles.

18. METALLURGICAL FURNACE (20), according to claim 16, **characterized in that** the plurality of solid agglomerates comprising fine metal particles consists of a plurality of solid agglomerates comprising one or more of basic oxygen steelmaking dust, willemite residues, zinc-containing metallurgical co-products, or zinc-containing processed scrap.

19. METALLURGICAL FURNACE (20), according to any one of claims 16 to 18, **characterized in that** the top temperature of the metallurgical furnace (20) is between 600 °C and 700 °C.

20. METALLURGICAL FURNACE, according to any one of claims 16 to 19, **characterized in that** it is fed with a metallic charge comprising self-reducing briquettes, wherein the metallic component consists of any metallurgical co-product that meets the minimum iron content requirements for pig iron production.
